# EUROPEAN PATENT SPECIFICATION

(11) **EP 1 234 700 B1**
(45) Date of publication and mention of the grant of the patent: **14.01.2004**
(21) Application number: 02002780.1
(22) Date of filing: 07.02.2002
(51) Int. Cl.: B60J 5/04, B60J 10/08

(54) **Door trim for automobile**
Innenverkleidungsteil für Kraftfahrzeuge
Garniture interieure de portes d'un véhicule automobile

(30) Priority: 15.02.2001 JP 2001038265
(43) Date of publication of application: 28.08.2002
(73) Proprietor: Takashimaya Nippatsu Kogyo Co. Ltd., Toyota-shi, Aichi-ken, 473-0935 (JP)
(72) Inventor: Hisada, Yuji, Takashimaya Nippatsu Kogyo Co., Ltd., Toyota-shi, Aichi-ken, 473-0935 (JP)
(74) Representative: Winter, Brandl, Fürniss, Hübner, Röss, Kaiser, Polte Partnerschaft

(56) References cited:
- EP-A- 0 524 447
- WO-A-01/34933
- GB-A- 2 272 469
- US-A- 5 095 655
- PATENT ABSTRACTS OF JAPAN vol. 008, no. 234 (M-334), 26 October 1984 (1984-10-26) & JP 59 114129 A (NISSAN JIDOSHA KK;OTHERS: 01), 2 July 1984 (1984-07-02)

## Description

### BACKGROUND OF THE INVENTION

### 1. FIELD OF THE INVENTION

This invention relates to a door trim for attachment to the door of an automobile.

### 2. DESCRIPTION OF THE RELATED ART

Prior art relating to door trim structure is known from e.g.
EP-0524447, US-5095655, JP-59114129, GB-2272469 or WO-0134933.

From Japanese Utility Model JP-4-31012 or JP-6-18030 is known a door trim for an automobile, in accordance with the preamble of claim 1.

However, according to the conventional type, since the door trim with the weather strip is mounted to a door panel by hooking, the weather strip may be deviated from the door trim when the weather strip is not assembled securely into the door trim, which may lead to the problem that a stable sealing effect can not be obtained.

### SUMMARY OF THE INVENTION

Considering the above problem, the object of the present invention is to provide a door trim for an automobile, that enables an accurate and easy assembly of a weather strip to a door trim to achieve a stable sealing effect of the weather strip.

This object is solved by the subject matter of claim 1. Advantageous embodiments are defined in the subclaims. Accordingly, the assembling of the door trim and the weather strip can be performed accurately.

### BRIEF DESCRIPTION OF THE DRAWINGS

Fig. 1 shows a sectional view of an embodiment of the present invention; and
Fig. 2 shows a perspective view of an automobile door.

### DESCRIPTION OF THE PREFERRED EMBODIMENTS

A preferred embodiment of the invention will be described with reference to the attached drawings.

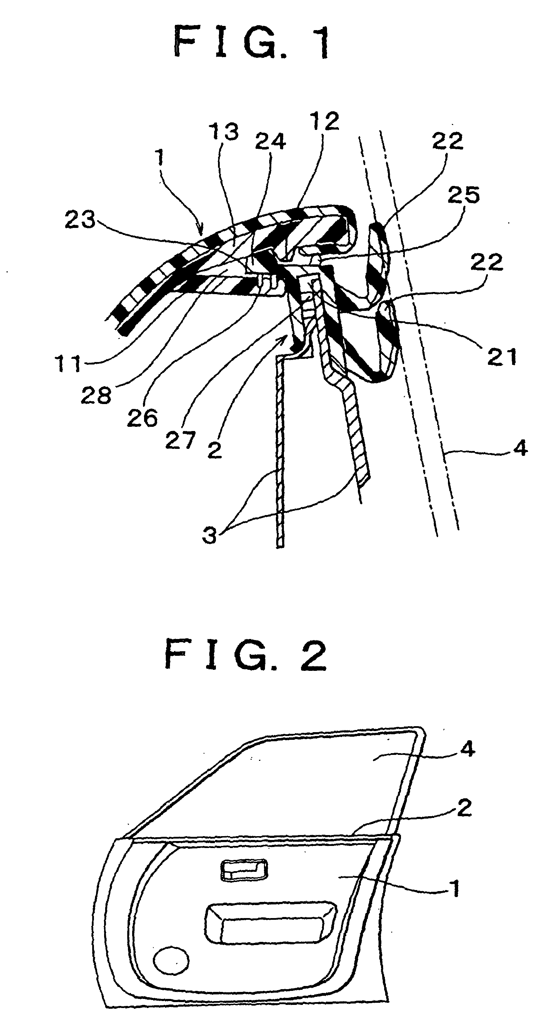

Fig. 1 and Fig. 2 show the invention adapted to a front door of an automobile. The front door for the automobile includes a door trim 1, a weather strip 2 attached to a garnish portion 13 of the door trim 1 for sealing a window glass, a door panel 3, and the window glass 4. The garnish portion 13 means an area in the vicinity of an upper end of the door trim 1.

The weather strip 2 has a supporting portion 21 with a reverse U shaped cross section made from a hard resin material and a lip portion 22 made from a flexible material, such as a soft resin material provided at the outer surface side of the supporting portion 21. The supporting portion 21 and the lip portion 22 are integrally formed.

The supporting portion 21 is provided with a brim portion 23 extending from a top portion of the supporting portion 21 to an automobile compartment side, i.e., toward a door trim side, and an upward projection 24 is provided at an inner tip end of the brim portion 23.

On the other hand, the area in the vicinity of the upper end of the door trim 1 is bent toward the outside of the compartment or automobile to form the garnish portion 13. A flange portion 11 is provided on the garnish portion 13 at the outer side surface of the garnish portion 13, somewhat lower from an upper end of the garnish portion 13. The flange portion 11 extends toward the weather strip side, i.e., toward the outside of the automobile compartment.

A space between the upper end of the garnish portion 13 and the flange portion 11 at the outer side of the automobile compartment is narrowed due to the bending of the garnish portion 13 of the door trim 1 toward the outside of the automobile such that a holding portion 28 is formed by the flange portion 11 and the outer surface of the garnish portion 13. The holding portion 28 has at least an opening toward the weather strip 2 in a state where the weather strip 2 is attached to the door panel 3.

A downward projection 12 is provided on the outer side surface of the garnish portion 13 between the upper end thereof and the flange portion 11 in crossing direction with the flange portion 11. When the brim portion 23 is inserted into the holding portion 28, the upward projection 24 of the weather strip 2 engages with the downward projection 12 of the garnish portion 13.

The supporting portion 21 of the weather strip 2 defines and secures the position of the weather strip 2 at the door panel 3 by sandwiching an inserting end portion of the door panel 3 into the supporting portion 21.

A seal piece 25 is provided on an upper surface of the supporting portion 21 of the weather strip 2 to be in sealing contact with the garnish portion 13. This will assure the waterproof, wind resistance, or isolation of noise as well as the stable assembling.

A pawl portion 26 is provided on an underside surface of the brim portion 23 of the weather strip 2 for engaging with the flange portion 11 to also assure the improvement in water proof, wind resistance, or isolation of noise as well as the stable assembling.

A seal piece 27 is provided in the reverse U shape of the supporting portion 21 on the weather strip 2 for keeping the air-tightness between the supporting portion 21 and the door panel 3.

The flange portion 11 can be provided over the entire garnish portion 13 in automobile longitudinal direction, i.e., front and rear direction; in an alternative embodiment, a plurality of flanges may be provided intermittently on several portions of the garnish portion 13 in automobile longitudinal direction. The latter case may be preferable because it can improve molding efficiency and reduce weight of the door trim 1.

Further, by integrally forming the flange portion 11 with the door trim 1 made from a synthetic resin, such as polypropylene at the same time with the injection molding of the door trim 1, the productivity can be improved extremely.

The brim portion 23 provided on the top of the supporting portion 21 and extending toward door trim side is integrally formed with the weather strip 2 and the tip end of the flange portion 11 is formed at the automobile compartment side inner than the door panel 3.

By simply inserting the brim portion 23 into the holding portion 28 provided between the flange portion 11 and the garnish portion 13, fixing of the weather strip 2 to the door trim 1 can be easily carried out. According to the door trim in accordance with the present invention, it is not necessary to prepare any extra parts for the fixing of the door trim 1 and the weather strip 2.

Upon usual assembling the door trim with the door panel, first the door trim is lifted to a position higher than the door panel, and then it is moved in horizontal direction to hook the door trim with the panel. According to this usual assembling method, the door trim must be moved over the upper end of the door panel in vertical direction and then be moved in horizontal direction for hooking.

However, according to the door trim in accordance with the embodiment mentioned above of the present invention, first the position of the weather strip 2 is defined and fixed to the door panel 3, then the door trim 1 is moved in horizontal direction so as to insert the brim portion 23 of the weather strip 2 into the holding portion 28 provided between the flange portion 11 of the door trim 1 and the garnish portion 13.

Thus, the assembly of the door trim 1 to the door panel 3 can be performed by moving only in horizontal direction. According to this assembling method, the door trim 1 is not necessarily lifted upward and assembly can be easily and yet accurately carried out. Therefore, this assembling method improves the efficiency of assembly work extremely.

According to the above mentioned structure, the position of the weather strip 2 will not deviate from the desired position and can be assembled accurately position to stably achieve the intended sealing effect.

Further, by providing the seal piece 25 and pawl portion 26, any gap between the door trim 1 and the weather strip 2 is not generated to surely prevent water leakage, noise and wind from outside.

## Claims

1. A door trim (1) for an automobile, comprising:
a weather strip (2) attachable to a door panel (3) of the automobile and having a brim portion (23) extending toward an automobile compartment side in a state where the weather strip (2) is attached to the door panel (3), and
a garnish portion (13) to which is fixed the weather strip (2),
**characterized in that**
the garnish portion (13) has a holding portion (28) receiving and holding the brim portion (23) of the weather strip (2), which holding portion (28) has an opening toward the weather strip (2) in a state where the weather strip (2) is attached to the door panel (3),
wherein the brim portion (23) of the weather strip (2) is held by and fixed to the holding portion (28) of the garnish portion (13).

2. A door trim (1) according to claim 1, wherein
the holding portion (28) is formed between a flange portion (11) extending from the garnish portion (13) toward the weather strip (2), and an outer side surface of the garnish portion (13) bent toward the automobile outer side so as to be positioned above the flange portion (11) in automobile upward direction.

3. A door trim (1) according to claim 2, wherein
the weather strip (2) includes a supporting portion (21) with an approximately reverse U shaped cross section attachable to the door panel (3) by inserting an upper end portion thereof, and a lip portion (22) integrally formed on an outer side surface of the weather strip (2), and an upward projection (24) provided at an inner side tip end of the brim portion (23),
the garnish portion (13) includes a downward projection (12) projecting from the outer side surface towards the flange portion (11) and being provided between the upper end of the door trim (1) and the flange portion (11), and
the upward projection (24) is engaged between the downward projection (12) and the flange portion (11) to fix and define a position of the weather strip with respect to the garnish portion (13) of the door trim (1).

4. A door trim (1) according to claim 3, wherein
a seal piece (25) is provided on an upper surface of the supporting portion (21) of the weather strip (2) for tightly contacting to the outer side surface of the garnish portion (13).

5. A door trim (1) according to claims 3 and 4, wherein
a pawl portion (26) is formed on an under side surface of the brim portion (23) of the weather strip (2) for engaging with the flange portion (11).

6. A door trim (1) according to claims 3 through 5, wherein
a plurality of flange portions (11) is provided intermittently on the garnish portion (13) in automobile longitudinal direction.

7. A door trim (1) according to claims 3 through 6, wherein
the flange portion (11) is integrally formed with the door trim (1).

## Patentansprüche

1. Türverkleidung (1) für ein Kraftfahrzeug, mit:
einem an eine Türfüllung (3) des Kraftfahrzeugs anfügbaren Dichtungsstreifen (2) mit einem Randabschnitt (23), der sich in einem Zustand, in dem der Dichtungstreifen (2) an die Türfüllung (3) angefügt ist, in Richtung des Kraftfahrzeuginnenraums erstreckt, und
einem Zierabschnitt (13), an dem der Dichtungsstreifen (2) befestigt ist, **dadurch gekennzeichnet, dass**
der Zierabschnitt (13) einen Halteabschnitt (28) aufweist, der den Randabschnitt (23) des Dichtungsstreifen (2) aufnimmt und hält, wobei der Halteabschnitt (28) in einem Zustand, in dem der Dichtungstreifen (2) an die Türfüllung (3) angefügt ist, eine Öffnung in Richtung des Dichtungsstreifens (2) aufweist,
wobei der Randabschnitt (23) des Dichtungsstreifens (2) vom Halteabschnitt (28) des Zierabschnitts (13) gehalten und an diesem befestigt ist.

2. Türverkleidung (1) gemäß Anspruch 1, wobei der Halteabschnitt (28) zwischen einem Bördelabschnitt (11), der sich vom Zierabschnitt (13) zum Dichtungsstreifen (2) erstreckt, und einer äusseren Fläche des Zierabschnitts (13), der in Richtung der Kraftfahrzeugaussenseite gebogen ist, gebildet wird, um sich in Richtung der Kraftfahrzeugoberseite oberhalb,des Bördelabschnitts (11) zu befinden.

3. Türverkleidung (1) gemäß Anspruch 2, wobei der Dichtungsstreifen (2) einen Trageabschnitt (21), der eine im Wesentlichen umgekehrte U-Querschnittsform aufweist und durch Einführen eines oberen Endabschnitts der Türfüllung (3) an die Türfüllung (3) anfügbar ist, und einen an einer äusseren Fläche des Dichtungsstreifens (2) einteilig geformten Lippenabschnitt (22), und einen am inneren Spitzende des Randabschnitts (23) aufwärts gerichteten Vorsprung (24) umfasst, der Zierabschnitt (13) einen abwärts gerichteten Vorsprung (12) aufweist, der von der äusseren Fläche in Richtung des Bördelabschnitts (11) ragt und zwischen dem oberen Ende der Türverkleidung (1) und dem Bördelabschnitt (11) vorgesehen ist, und der aufwärts gerichtete Vorsprung (24) zwischen dem abwärts gerichteten Vorsprung (12) und dem Bördelabschnitt (11) eingerastet wird, um den Dichtungsstreifen zu befestigen und dessen Position bezüglich des Zierabschnitts (13) der Türverkleidung (1) festzulegen.

4. Türverkleidung (1) gemäß Anspruch 3, wobei auf einer oberen Fläche des Trageabschnitts (21) des Dichtungsstreifens (2) ein Dichtelement (25) zur festen Berührung mit der äusseren Fläche des Zierabschnitts (13) vorgesehen ist.

5. Türverkleidung (1) gemäß den Ansprüchen 3 und 4, wobei ein Verzahnungsabschnitt (26) an einer unteren Fläche des Randabschnitts (23) des Dichtungsstreifens (2) zum Verzahnen mit dem Bördelabschnitt (11) ausgebildet ist.

6. Türverkleidung (1) gemäß den Ansprüchen 3 bis 5, wobei eine Vielzahl von Bördelabschnitten (11) intermittierend am Zierabschnitt (13) in Kraftfahrzeuglängsrichtung vorgesehen ist.

7. Türverkleidung (1) gemäß den Ansprüchen 3 bis 6, wobei der Bördelabschnitt (11) mit der Türverkleidung (1) einteilig ausgebildet ist.

## Revendications

1. Garniture intérieure de porte (1) pour un véhicule automobile comprenant :
un caoutchouc d'étanchéité (2) pouvant être attaché à un panneau de porte (3) du véhicule automobile et ayant une partie formant bord (23) s'étendant vers un côté du compartiment du véhicule automobile dans un état où le caoutchouc d'étanchéité (2) est attaché au panneau de porte (3), et
une partie formant garniture intérieure (13) à laquelle est fixé le caoutchouc d'étanchéité (2)
**caractérisé en ce que**
la partie formant garniture intérieure (13) a une partie de maintien (28) recevant et maintenant la partie formant bord (23) du caoutchouc d'étanchéité (2), laquelle partie de maintien (28) a une ouverture vers le caoutchouc d'étanchéité (2) dans un état où le caoutchouc d'étanchéité (2) est attaché au panneau de porte (3),
dans laquelle la partie formant bord (23) du caoutchouc d'étanchéité (2) est maintenue par et fixée à la partie de maintien (28) de la partie formant garniture intérieure (13).

2. Garniture intérieure de porte (1) selon la revendication 1, dans laquelle
la partie de maintien (28) est formée entre une partie formant bride (11) s'étendant depuis la partie formant garniture intérieure (13) vers le caoutchouc d'étanchéité (2), et une surface latérale extérieure de la partie formant garniture intérieure (13) courbée vers la surface extérieure du véhicule automobile de façon à être positionnée au-dessus de la partie formant bride (11) dans une direction vers le haut du véhicule automobile.

3. Garniture intérieure de porte (1) selon la revendication 2, dans laquelle
le caoutchouc d'étanchéité (2) comprend une partie de support (21) avec une section transversale approximativement en forme de U inversé pouvant être attachée au panneau de porte (3) en y insérant une partie d'extrémité supérieure et une partie formant lèvre (22) formée de manière intégrante sur une surface latérale extérieure du caoutchouc d'étanchéité (2) et une projection vers le haut (24) fournie vers une extrémité du bout latéral intérieur de la partie formant bord (23),
la partie formant garniture intérieure (13) comprend une saillie orientée vers le bas (12) dépassant depuis la surface latérale extérieure vers la partie formant bride (11) et étant fournie entre l'extrémité supérieure de la garniture intérieure de porte (1) et la partie formant bride (11), et la saillie orientée vers le haut (24) est engrenée entre la saillie orientée vers le bas (12) et la partie formant bride (11) pour fixer et définir une position du caoutchouc d'étanchéité par rapport à la partie formant garniture intérieure (13) de la garniture intérieure de porte (1).

4. Garniture intérieure de porte (1) selon la revendication 3, dans laquelle
une pièce de scellement (25) est fournie sur la surface supérieure de la partie de support (21) du caoutchouc d'étanchéité (2) pour être en contact étroit avec la surface latérale extérieure de la partie formant garniture intérieure (13).

5. Garniture intérieure de porte (1) selon les revendications 3 et 4, dans laquelle
une partie formant un cliquet (26) est formée sur une surface latérale inférieure de la partie formant bord (23) du caoutchouc d'étanchéité (2) pour être en prise avec la partie formant bride (11)

6. Garniture intérieure de porte (1) selon les revendications 3 à 5, dans laquelle
une pluralité de parties formant bride (11) est fournie par intermittences sur la partie formant garniture intérieure (13) dans la direction longitudinale du véhicule automobile.

7. Garniture intérieure de porte (1) selon les revendications 3 à 6, dans laquelle,
La partie formant bride (11) est intégralement formée avec la garniture intérieure de porte (1).
